# EUROPEAN PATENT APPLICATION

(11) **EP 1 134 382 A2**
(43) Date of publication of application: **19.09.2001**
(21) Application number: 01106264.3
(22) Date of filing: 14.03.2001
(51) Int. Cl.: F02C 7/18, F02C 7/16, F02C 7/12

(54) **A gas turbine**

(30) Priority: 15.03.2000 JP 2000072053
(71) Applicant: Mitsubishi Heavy Industries, Ltd., Tokyo (JP)
(72) Inventor: Shigemi, Mandai, c/o Mitsubishi Heavy Ind., Ltd., Takasago, Hyogo-ken (JP); Masataka, Ohta, c/o Mitsubishi Heavy Ind., Ltd., Takasago, Hyogo-ken (JP); Kuniaki, Aoyama, c/o Mitsubishi Heavy Ind., Ltd., Shinhama 2-chome, Takasago, Hyogo-ken (JP); Katsunori, Tanaka, c/o Mitsubishi Heavy Ind., Ltd., Shinhama 2-chome, Takasago, Hyogo-ken (JP)
(74) Representative: Henkel, Feiler, Hänzel

(57) **Abstract**

A gas turbine is provided with combustors having cooling passages formed in the wall of the combustors. The walls of the combustors are cooled by cooling fluid flowing through the cooling passages. Steam generated by a waste heat recovery boiler is supplied to the cooling passages as cooling fluid during the normal operation of the gas turbine. During start up and shut down operation of the gas turbine, pressurized air from the gas turbine compressor is supplied to the cooling passage as cooling fluid. Since pressurized air from the gas turbine compressor is used for cooling fluid for the combustors during start up and shut down operations, a separate auxiliary boiler is not required for supplying cooling steam to the combustor during start up and shut down operation.

## Description

### BACKGROUND OF THE INVENTION

### 1. Field of the Invention

The present invention relates to a gas turbine and, specifically, the present invention relates to a cooling system for a gas turbine and method for starting and stopping a gas turbine using the cooling system.

### 2. Description of the Related Art

In the field of large scale gas turbines used in electric power generating plants and for other industrial uses, the requirement for reduction of NOₓ in the exhaust gas has become more and more serious from the standpoint of environmental protection. The amount of NOₓ contained in the exhaust gas of gas turbines increases as the combustion temperature in the combustor thereof becomes higher and significantly increases when the combustion temperature is higher than 1600°C (1873°K).

In order to fulfill the requirement, recent gas turbines use so called low NOₓ type combustors. In a low NOₓ type combustor, fuel is burnt mainly in a premixed combustion and the proportion of a diffusion combustion in the whole combustion is reduced. In diffusion combustion, since fuel is injected in combustion air and an air-fuel mixture, formed in a boundary region between fuel and air, burns, an excess air ratio in the diffusion combustion is relatively high. Therefore, although a stable combustion is obtained in a diffusion combustion, the amount of NOₓ produced by a diffusion combustion is rather high due to its higher combustion temperature.

On the other hand, in a premixed combustion, a uniform mixture of air and fuel is formed and injected into the combustor. Since a pre-mixture of air and fuel burns in the combustor, the excess air ratio of combustion can be adjusted freely in premixed combustion. Therefore, the amount of NOₓ produced can be reduced by lowering combustion temperature in premixed combustion.

As explained above, it is preferable to lower the combustion temperature in the combustor in order to suppress the production of NOₓ in the combustor. However, since the output and the thermal efficiency of gas turbines increases as the temperature of combustion gas at a turbine inlet is higher, it is preferable to raise the combustion temperature in the combustor in order to achieve a higher output and thermal efficiency of gas turbines. In an actual gas turbine, therefore, it is required to maintain the temperature of combustion gas at the turbine inlet as high as possible while maintaining the combustion temperature in the combustor at the temperature lower than 1600°C (1873°K) in order to achieve the maximum output and thermal efficiency of gas turbine without increasing NOₓ in the exhaust gas.

In the recent gas turbines, the combustion gas temperature at the turbine inlet can be increased to about 1500°C (1773°K) due to improvements in the materials of first stage stator blades and rotor blades of gas turbines as well as cooling system thereof. In fact, so called 1500°C class gas turbines have already been put into practical use. In the 1500°C class gas turbines, the output and thermal efficiency are increased to the maximum by raising the turbine inlet temperature to around 1500°C while suppressing the production of NOₓ by maintaining the combustion temperature in the combustor at less than 1600°C. In general, it is necessary to use steam for cooling the combustor wall of a 1500°C class gas turbine.

In conventional gas turbines where the turbine inlet temperature is relatively low (for example, about 1350°C (1623°K)), air cooled combustors which utilize a portion of discharge air of the gas turbine compressor for cooling the walls of the combustors are used. In the air cooled combustors, cooling air passages are formed within the combustor walls and the cooling efficiency of the combustor walls are increased by using both convective cooling and film air cooling.

In the convective cooling, the combustor walls are cooled by cooling air flowing through the cooling air passage formed in the combustor wall. In the film air cooling, cooling air flowing through the cooling air passage is injected in the direction along the inner surface of the combustor from injection holes formed on the inner surface of the combustor walls in order to form a thin air film on the inner surface of the combustor wall. The heat load on the combustor wall is reduced by this air film formed on the surface of the combustor wall.

This type of cooling air system for a combustor of gas turbine is, for example, disclosed in Japanese Unexamined Patent Publication (Kokai) No. 3-267618.

However, it is difficult to apply a film air cooling system, such as disclosed in the '618 publication, to a 1500°C class gas turbine since the difference between the combustion temperature in the combustor (about 1600°C) and the turbine inlet temperature at the rated condition (about 1500°C) is small.

In the film air cooling system, cooling air injected from the injection holes mixes with combustion gas in the combustor after forming air film on the combustor wall surface and supplied to the turbine. If the film air cooling system is used for a 1500°C class gas turbine, since the temperature of the combustion gas is lowered by the cooling air injected into the combustor, it is difficult to maintain the turbine inlet temperature at 1500°C while maintaining the combustion temperature in the combustor at 1600°C.

However, it is also difficult to reduce the heat load of the combustor wall to an allowable level using convective cooling only, i.e., without using film air cooling.

In order to solve this problem, steam can be conveniently used for cooling the combustor wall in a combined cycle gas turbine plant. A combined cycle gas turbine plant is provided with a waste heat recovery boiler for generating steam using heat of the gas turbine exhaust gas. Since steam is always generated by the waste heat recovery boiler during the operation of the gas turbine in the combined cycle gas turbine plant, the 1500°C class gas turbine in the combined cycle gas turbine plant uses steam from the waste heat recovery boiler in lieu of cooling air for the convective cooling of the combustor wall.

In the steam cooling system, cooling steam is supplied to cooling passages formed in the combustor wall and it cools the combustor wall by convective cooling. Cooling steam is collected and re-used after flowing through the cooling steam passages. By using steam as cooling fluid, the metal temperature, i.e., the wall temperature of the combustor (particularly, the metal temperature of the wall of the tail pipe, as explained later) can be maintained at a value lower than the maximum allowable temperature (for example, 800°C (1073°K)) while raising the temperature of combustion gas at the turbine inlet to around 1500°C. Therefore, in 1500°C class gas turbines, reliability and durability of combustors are much improved by employing steam cooling system.

However, problems occur when the steam cooling system is used for the combustors of gas turbines.

For example, in order to use the steam cooling system for the combustors, cooling steam must be available from the start up period of the gas turbine in which steam is not generated at the waste heat recovery boiler. Therefore, when the steam cooling system is used for the combustors, an auxiliary boiler separate from the waste heat recovery boiler is required for supplying cooling steam to the gas turbine during the start up period of the gas turbine. This increases the initial cost of the combined cycle gas turbine plant.

Further, when cooling steam is used, steam remains in the cooling steam passages and cooling steam pipes after the turbine is stopped. The steam remaining in the cooling system condenses as the gas turbine cools after the turbine is stopped. Therefore, it is necessary to discharge water, formed by the condensation of the cooling steam, from cooling steam passages and pipes before re-starting the gas turbine. This requires complicated procedure and increases the time required for starting the turbine.

### SUMMARY OF THE INVENTION

In view of the problems in the related art as set forth above, one of the objects of the present invention is to provide a means for reducing the initial cost of combined cycle gas turbine plants and simplify the starting operation of the gas turbine by solving the problems accompanied by the steam cooling system.

The objects as set forth above are achieved by a gas turbine, according to the present invention, comprising a turbine driven by combustion gas generated by burning a mixture of combustion air and fuel in a combustor, an air compressor driven by the turbine for supplying pressurized combustion air to the combustor, a cooling passage formed in the wall and a cooling means for cooling the wall of combustor by supplying a cooling fluid to the cooling passage, wherein the cooling means supplies either of steam and air, or both of steam and air to the cooling passage as the cooling fluid.

According to the present invention, since either of air and steam can be supplied to the cooling passage of the combustor, it is possible to supply pressurized air, for example, from the gas turbine compressor during starting and stopping the gas turbine. Therefore, an auxiliary boiler for supplying cooling steam during starting of the gas turbine is not required. Further, since the combustor is cooled by pressurized air when the turbine is stopped, steam does not remain in the cooling system of the combustor such as the cooling passage and cooling pipes after the gas turbine is shut down. Therefore, water is not formed in the cooling system even when the gas turbine is cooled. Further, since both of air and steam can be supplied to the cooling passage of the combustor at the same time, the switching of cooling fluid from air to steam and vice versa can be performed gradually. Thus, sudden change in the temperature of cooling fluid during the switching of cooling fluid does not occur.

### BRIEF DESCRIPTION OF THE DRAWINGS

The present invention will be better understood from the description, as set forth hereinafter, with reference to the accompanying drawings in which:
Fig. 1 is a longitudinal section view of a combustor used in an embodiment of the gas turbine of the present invention; and
Fig. 2 is a schematic diagram showing a combined cycle gas turbine plant using the gas turbine of the present invention.

### DESCRIPTION OF THE PREFERRED EMBODIMENT

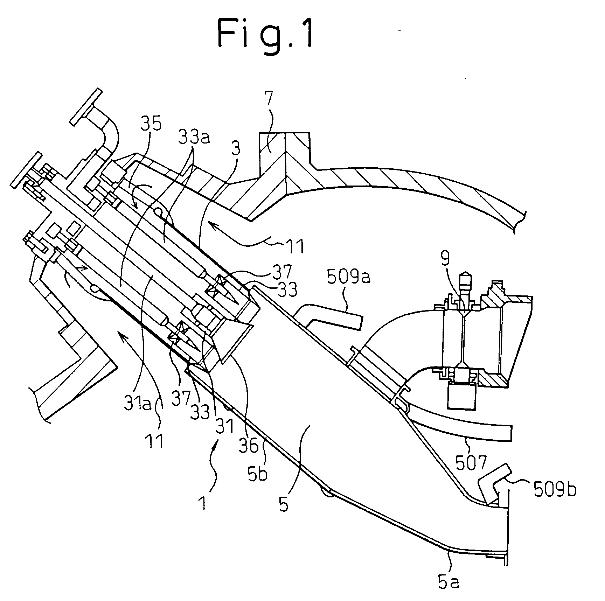

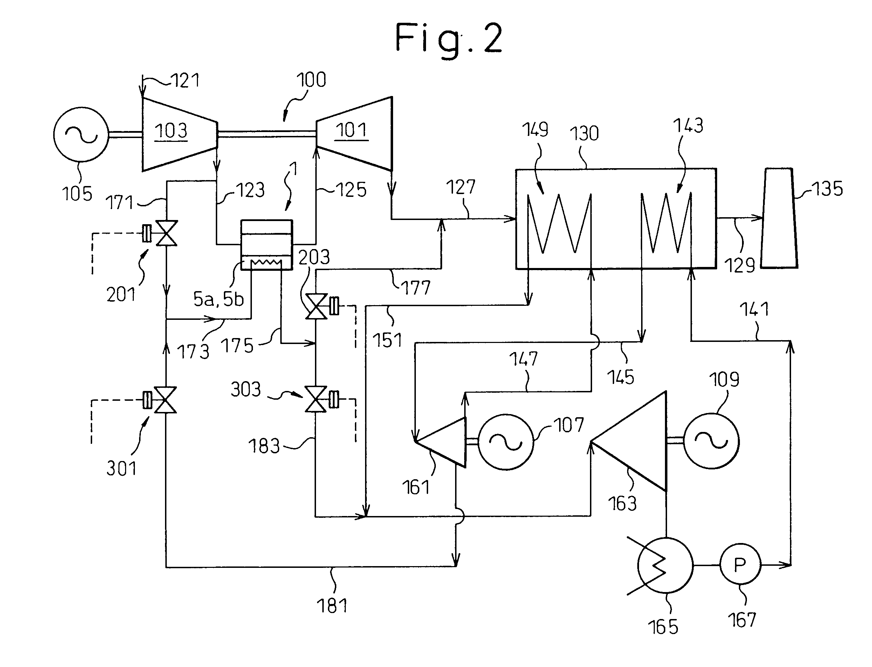

Hereinafter, embodiments of the gas turbine according to the present invention will be explained with reference to Figs. 1 and 2.

Fig. 1 is a longitudinal section view showing a construction of a combustor used in a gas turbine according to an embodiment of the present invention.

In Fig. 1, reference numeral 1 designates a combustor of a gas turbine as a whole. The combustor 1 consists of a combustor portion 5 and a nozzle portion 3. The nozzle portion contains fuel nozzles for injecting fuel into the combustor portion 5.

In this embodiment, the combustor portion 5 includes a combustion tube 5b which acts as a combustion chamber for burning fuel injected from fuel nozzles and a tail pipe 5a which directs the combustion gas generated in the combustion tube 5b to the turbine inlet. The combustor portion 5 is a one-piece member in which the combustion tube 5b and the tail pipe 5a are formed as integral parts. The combustor 1 is held in a turbine casing 7 by supports not shown in the drawing. In an actual gas turbine, plural combustors as shown in Fig. 1 are arranged around the turbine at a regular interval and each supplies combustion gas to the turbine.

Combustion air (the arrow 11 in Fig. 1) is compressed from the atmosphere by a gas turbine compressor driven by the turbine and supplied to the casing 7. Combustion air 11 enters to the nozzle portion 3 of the combustor 1 through combustion air inlets 35 disposed around the nozzle portion 3 and injected into the combustion portion 5 of the combustor 1 through a pilot nozzle 31 and main nozzles 33.

The nozzle portion 3 includes a cylindrical shell, a pilot nozzle 31 disposed at the center of the shell and plural main nozzles 33 (in this embodiment, eight main nozzles are used) disposed at a regular interval around the pilot nozzle 33. The pilot nozzle 31 is provided with pilot fuel nozzle 31a for injecting fuel into combustion tube 5b. Fuel injected from the pilot fuel nozzle 31a is ignited by an igniter (not shown in the drawing) and, while it mixes with combustion air flowing through the pilot nozzle 31, burns in a diffusion combustion mode and forms a pilot flame.

In this case, the main nozzles 33 are formed as premix nozzles which form a premixed air-fuel mixture by mixing fuel injected from the fuel nozzles 33 into combustion air in the nozzle portion 3 before injecting premixed air-fuel mixture into combustion tube 5a. The main nozzles 33 are provided with swirlers 37. The swirlers 37 are formed as vanes having aerofoil shape cross sections and each disposed at a predetermined angle to the combustion air flow in the nozzle 33 in order to impart tangential velocity to the combustion air flowing through the nozzle 33. Therefore, a swirl of combustion air is formed in the main nozzle 33 by the swirler 37.

In this embodiment, a gaseous fuel such as town gas and natural gas and liquid fuel such as heavy oil or gas oil are used for fuel. Fuel is injected into the swirl of the combustion air in the nozzle 33 from injection holes (not shown in the drawing) disposed on the fuel nozzle 33a downstream of the swirler 37. Therefore, the mixing of the injected fuel and combustion air is promoted by the swirl of combustion air and a uniform pre-mixture of air and fuel is formed in the main nozzle 33.

A funnel shaped pilot cone 36 is provided at the outlet of the pilot nozzle 31. The pilot cone 36 prevents the air-fuel mixture injected from the main nozzles 33 from contacting the pilot flame at the portion close to the outlet of the main nozzles 33 in order to avoid back firing in the main nozzles 33.

In Fig. 1, numeral 9 designates an air bypass valve. The air bypass valve 9 is a gate valve directly connecting the tail pipe 5b to the interior of the casing 7. The air bypass valve 9 controls the amount of combustion air supplied to the combustion portion 5 from the nozzle portion 3 in accordance with a load of the gas turbine. For example, when the amount of combustion air required for the combustion in the combustion portion 5 (such as during the start up and light load operation of the gas turbine), the air bypass valve 9 is opened by an actuator (not shown) in order to supply combustion air in the casing 7 directly to the interior of the tail pipe 5a. Since this causes a decrease in the combustion air flowing through the main nozzle 33, a suitable pre-mixture of air and fuel is formed in the main nozzle 33.

The air-fuel mixture injected from the main nozzles 36 around the pilot cone 36 contacts the pilot flame formed by the pilot nozzle 31 at the periphery of the outlet of pilot cone 36 and is ignited by the pilot flame. Therefore, the air-fuel mixture injected from the main nozzles 33 forms a premixed combustion flame at a portion sufficiently distant from the outlet of the main nozzle 33.

The combustion gas generated by the premixed combustion flame flows through the tail pipe 5 and inlet stator blades (not shown) and flows into the rotor blades of the turbine in order to rotate the turbine.

In this embodiment, a cooling fluid passage is formed in the wall of the combustor 1 for cooling the wall by cooling fluid. Namely, the walls of the combustion tube 5b and the tail pipe 5a in this embodiment has a double-wall construction which includes thin outer wall and inner wall separated by a clearance formed therebetween. The clearance between the outer and inner walls acts as a passage for cooling fluid. Further, a cooling fluid supply pipe 507 is connected to the cooling passage at the portion corresponding to the boundary between the combustion tube 5b and the tail pipe 5a. Cooling fluid flowing into the cooling passage from the supply pipe 507 is divided into a reverse (upstream) direction flow which flows through the wall of the combustion tube 5b towards the main nozzle and a forward (downstream) direction flow which flows through the wall of the tail pipe 5a towards the turbine inlet. After cooling the inner walls of the combustion tube 5b and the tail pipe 5a, the cooling fluid flowing towards respective direction is collected by the outlet pipes 509a and 509b connected to the upstream end of the combustion tube 5b and the downstream end of the tail pipe 5a, respectively.

In this embodiment, two types of cooling fluids, i.e., pressurized air (discharge air of the gas turbine compressor) and steam generated by the waste heat recovery boiler are used.

Fig. 2 is a schematic diagram of a combined cycle gas turbine plant using a gas turbine equipped with the combustors 1 in Fig. 1.

In Fig. 2, numeral 100 designates a gas turbine as a whole, 101 designates a turbine of the gas turbine 100 and 103 designates a compressor of the gas turbine 100. 105 is an external load of the gas turbine 100 such as an electric generator. Further, numeral 130 shows a waste heat recovery boiler for the gas turbine 100, 161 and 163 are a high pressure turbine and a low pressure turbine each driven by the steam generated by the waste heat recovery boiler 130. 107 and 109 are external loads, driven by the high pressure turbine and the low pressure turbine, such as electric generators.

Gas turbine inlet air 121 is taken from ambient and compressed by the compressor 103 and sent to the combustor 1 as combustion air 123. The combustion air 123 is mixed with fuel separately supplied to the combustor. Combustion gas 125 generated by the combustion of the air-fuel mixture in the combustor 1 is supplied to the turbine 101 and drives the same. Combustion gas after driving the turbine is supplied to the waste heat recovery boiler 130 as exhaust gas 127. After generating steam at the waste heat recovery boiler 130, exhaust gas 129 from the waste heat boiler 130 is discharged from a stack 135 after exhaust gas treatment, if required.

High pressure steam 145 is generated from boiler feed water 141 by a steam generator 143 of the waste heat recovery boiler 130. This high pressure steam is supplied to the high pressure turbine 161 and drives the turbine with its external load 107. After driving the high pressure turbine 161 and the external load 107, exhaust steam 147 is sent to a re-heater 149 of the waste heat recovery boiler 130, where the steam is reheated and becomes low pressure steam 151. This low pressure steam 151 is supplied to the low pressure turbine 163. After driving the low pressure turbine 163 and its external load 109, the exhaust steam from the low pressure turbine 163 is condensed at a condenser 165. Condensate produced by the condenser 165 is again sent to the steam generator 143 as boiler feed water 141 by a feed pump 167.

Next, the cooling system of the combustor 1 of the present embodiment will be explained in detail.

As explained before, either pressurized air from the gas turbine compressor 103 or steam from the waste heat recovery boiler 130 is used in the cooling system for the combustor 1 in this embodiment. Pressurized air 171 used for cooling medium is branched from the combustion air at the outlet of the compressor 103 and supplied to the combustors 1 as cooling fluid 173 to the cooling fluid supply pipe 507 (Fig. 1) after being adjusted its flow rate by a flow control and shut off valve 201. Pressurized air (cooling fluid) 173 further flows into the cooling passages formed in the wall of the combustor 1 and, after cooling the walls of the combustion tube 5b and the tail pipe 5a by convective cooling, is collected by the outlet pipes 509a and 509b (Fig. 1). This outlet air 175 passes through a shut off valve 203 and joins the exhaust gas 127 of the gas turbine (177 in Fig. 2).

On the other hand, steam used for cooling fluid is extracted from intermediate stage of the high pressure turbine 161 (181 in Fig. 2). The extracted steam is adjusted its flow rate by a flow control and shut off valve 301 and supplied to the cooling fluid inlet pipe 507 as cooling fluid 173. After cooling the walls of the combustion tube 5b and the tail pipe 5a, steam is collected by the outlet pipes 509a and 509b. The outlet steam 175 passes through a shut off valve 303 and joins low pressure steam 151 to the low pressure turbine 163 (183 in Fig. 2).

In this embodiment, operations of the flow control and shut off valves 201, 301 and shut off valves 203, 303 are controlled by a control unit of the plant (not shown in the drawing).

Next, the start up and shut down procedure of the gas turbine 100 in this embodiment will be explained.

Since the steam from the waste heat recovery boiler 130 is not available when the gas turbine 100 is started, pressurized air is used as the cooling fluid during the start-up period of the gas turbine 100. In this case, the flow control and shut off valve 301 for steam and the shut off valve 303 are closed and the shut off valve 203 for pressurized air is opened. Thus, when the gas turbine 100 is rotated by a starting device such as a starter motor, pressurized air is discharged from the compressor 103. A portion of the pressurized air from the compressor 103 is supplied to the combustor 1. After combustion of air-fuel mixture takes place in the combustor 1, the rotation speed of the gas turbine compressor 103 increases and the amount of the pressurized air supplied to the combustor 1 is increased accordingly. Thus, the walls of the combustor 1 are cooled by the discharge air of the compressor 103 during the start-up and a relatively low load operation after the gas turbine 100 has started.

When the load of the gas turbine 100 is increased, steam is generated by the waste heat recovery boiler 130 as the temperature of the exhaust gas of the gas turbine increases. When the conditions of steam generated by the waste heat recovery boiler 130 such as temperature, pressure and quantity reach a predetermined values, the cooling fluid is switched from pressurized air to steam.

When the cooling fluid is switched from pressurized air to steam, the flow control and shut off valve 201 for pressurized air is gradually closed while the flow control and shut off valve 301 for steam is gradually opened. During this period, the shut off valve 303 for steam is maintained at its close position. Thus, a mixture of air and steam is supplied to the combustor as a cooling fluid and the proportion of air in the cooling fluid gradually decreases during this period. Further, since all the cooling fluid (air and steam mixture) after cooling the combustor 1 is discharged to the exhaust gas of the gas turbine through the shut off valve 203, contamination of steam by air does not occur.

After the flow control and shut off valve 201 is fully closed and cooling fluid supplied to combustor becomes pure steam, the shut off valve 203 for pressurized air is gradually closed and, simultaneously, the shut off valve 303 for steam is gradually opened. When the shut off valve 203 for pressurized air is fully closed and the shut off valve 303 for steam is fully opened, the switch over of cooling fluid from air to steam is complete. After the switch over is completed, the walls of the combustors 1 are suitably cooled by steam from the waste heat recovery boiler 130 even when the heat load on the combustor walls increases due to the increase in the gas turbine load.

Next, shut down procedure of the gas turbine from this condition will be explained.

The procedure of the operation of the valves 201, 203, 301 and 303 during shut down of the gas turbine is inverse to the procedure during start up. Namely, the shut off valve 303 for steam is closed and shut off valve 203 for pressurized air is opened before the shut down of the gas turbine in order to discharge all of the cooling fluid (steam) from the combustors to the exhaust gas of the gas turbine 100. In this condition, the flow control and shut off valve 201 for pressurized air is gradually opened and, simultaneously, the flow control and shut off valve 301 for steam is gradually closed. When the flow control and shut off valve 201 is fully opened and the flow control and shut off valve 301 is fully closed, the switch over of cooling fluid from steam to air is complete. The gas turbine 100 is operated for a predetermined period at a predetermined load before it is shut down so that steam remained in the cooling passages and pipes are completely expelled by pressurized air. Thus, liquid drain is not produced in the cooling passages and pipes when the gas turbine 100 is cooled after it is shut down.

In the present embodiment, the pressurized air from the gas turbine compressor 103 is used for cooling fluid. However, the pressurized air may be supplied from another pressurized air source such as a separate motor driven air compressor.

## Claims

1. A gas turbine comprising
a turbine adapted to be driven by combustion gas generated by burning a mixture of combustion air and fuel in a combustor,
an air compressor adapted to be driven by the turbine for supplying pressurized combustion air to the combustor,
a cooling passage formed in the wall of the combustor and
a cooling means for cooling the wall of the combustor by supplying a cooling fluid to the cooling passage, wherein the cooling means is adapted to supply either of steam and air, or both of steam and air to the cooling passage as the cooling fluid.

2. A gas turbine as set forth in claim 1, wherein the cooling means is adapted to supply air to the cooling passage as the cooling fluid when the gas turbine is started and to switch the cooling fluid supplied to the cooling passage from air to steam after the load of the gas turbine increases to a predetermined value.

3. A gas turbine as set forth in claim 1, wherein the cooling means is adapted to switch the cooling fluid supplied to the cooling passage from steam to air before the gas turbine is stopped if the cooling means supplies steam to the cooling passage as the cooling fluid during the operation of the gas turbine.

4. A gas turbine as set forth in claim 2 or 3, wherein the cooling means is adapted to switch the cooling fluid from one to another by gradually decreasing the flow rate of one of a cooling fluid and, at the same time gradually increasing the flow rate of another cooling fluid so that both cooling fluids are supplied during the switching of the cooling fluid.

5. A gas turbine as set forth in claim 2 or 3, wherein the cooling means uses steam generated by a waste heat recovery boiler of the gas turbine as a cooling fluid.

6. A gas turbine as set forth in claim 2 or 3, wherein the cooling means uses air pressurized by the air compressor of the gas turbine as a cooling fluid.

7. A method for starting a gas turbine comprising:
supplying air pressurized by an air compressor to a cooling passage formed in the wall of a combustor of the gas turbine for cooling the wall of the combustor during start up of the gas turbine; and
supplying steam generated by a waste heat recovery boiler to the cooling passage for cooling the wall of the combustor after the gas turbine has started; and
terminating the supply of the air to the cooling passage after the steam is supplied to the cooling passage.

8. A method for stopping a gas turbine comprising:
supplying steam generated by a waste heat recovery boiler of the gas turbine to a cooling passage formed in the wall of a combustor of the gas turbine for cooling the wall of the combustor during the operation of the gas turbine;
supplying air pressurized by an air compressor to the cooling passage for cooling the wall of the combustor; and
terminating the supply of the steam to the cooling passage before the gas turbine is stopped.
